# EUROPÄISCHE PATENTSCHRIFT

(11) **EP 3 489 073 B1**
(45) Veröffentlichungstag und Bekanntmachung des Hinweises auf die Patenterteilung: **21.06.2023**
(21) Anmeldenummer: 18206752.0
(22) Anmeldetag: 16.11.2018
(51) Int. Cl.: B60L 15/20, B60W 30/20

(54) **VERFAHREN ZUR STEUERUNG EINES ANTRIEBSSYSTEMS FÜR MINDESTENS EINE ACHSE EINES KRAFTFAHRZEUGES**
METHOD FOR CONTROLLING A DRIVE SYSTEM FOR AT LEAST ONE AXLE OF A MOTOR VEHICLE
PROCÉDÉ DE COMMANDE D'UN SYSTÈME D'ENTRAÎNEMENT POUR AU MOINS UN ESSIEU D'UN VÉHICULE AUTOMOBILE

(30) Priorität: 28.11.2017 DE 102017128113
(43) Veröffentlichungstag der Anmeldung: 29.05.2019
(73) Patentinhaber: GKN Automotive Ltd., West Midlands, B37 7YE (GB)
(72) Erfinder: Ruiters, Volker-René, 53721 Siegburg (DE); Sontheim, Florian, 53844 Troisdorf (DE); Fitz, Rudolf, 53844 Troisdorf (DE); Blaj, Emanuel, 51429 Bergisch Gladbach (DE); Kaiser, Gerd, 74931 Lobbach (DE); Cordero, Enrique, 51103 Köln (DE)
(74) Vertreter: Rössler, Matthias

(56) Entgegenhaltungen:
- EP-A1- 2 597 772
- EP-A1- 2 634 057
- EP-A1- 3 219 562
- WO-A1-2016/151660
- DE-A1-102015 118 759
- FR-A1- 2 910 198
- FR-B1- 2 910 198
- JP-A- 2009 227 277
- US-A1- 2011 094 809
- US-A1- 2011 259 657

## Beschreibung

Die vorliegende Erfindung betrifft ein Verfahren zur Steuerung eines Antriebssystems für genau eine Achse eines Kraftfahrzeuges. Das Antriebssystem umfasst zumindest eine elektrische Maschine als Antriebseinheit, eine von der Antriebseinheit angetriebene Antriebswelle, eine erste Abtriebswelle und eine zweite Abtriebswelle, sowie eine die Antriebswelle mit der ersten Abtriebswelle verbindende erste Kupplung und eine die Antriebswelle mit der zweiten Abtriebswelle verbindende zweite Kupplung. Weiter ist eine Steuereinheit zur Regelung der Antriebseinheit und der Kupplungen vorgesehen. Die Kupplungen sind den Abtriebswellen von unterschiedlichen Achsen oder bevorzugt einer gemeinsamen Achse zugeordnet.

Derartige Antriebssysteme sind z. B. für die Weiterleitung und bedarfsgerechte Aufteilung eines von der Antriebseinheit bereitgestellten Drehmoments vorgesehen.

Es besteht ein ständiges Bedürfnis, Antriebssysteme möglichst so zu steuern, dass eine schnelle Anpassung an variierende Fahrsituationen und sich verändernde Betriebspunkte ermöglicht wird. Dabei soll eine Schwingungserregung in dem Antriebssystem berücksichtigt werden. Weiter sollen eine thermische oder mechanische Überbelastung der Komponenten des Antriebssystems und ein daraus folgendes ggf. vorzeitiges Versagen der Komponenten vermieden werden.

Hiervon ausgehend ist es Aufgabe der vorliegenden Erfindung, die eingangs genannten Nachteile und Probleme zumindest teilweise zu lösen und insbesondere ein hierfür geeignetes Verfahren zur Steuerung eines Antriebssystems (während des Betriebes eines Kraftfahrzeuges) vorzuschlagen. Das Verfahren soll insbesondere ermöglichen, dass Komponenten des Antriebssystems vor Überbelastung geschützt sind, wobei dabei eine möglichst schnelle und genaue Übertragung und Aufteilung eines z. B. von einem Fahrer des Kraftfahrzeuges gewünschten Antriebsdrehmoments über die Kupplungen auf die Räder mindestens einer Achse ermöglicht werden.

Hierzu tragen Verfahren gemäß den Merkmalen des Patentanspruchs 1 und des Patentanspruchs 2 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein (erstes) Verfahren zur Steuerung eines Antriebssystems für genau eine Achse eines Kraftfahrzeuges vorgeschlagen. Das Antriebssystem weist zumindest eine elektrische Maschine als Antriebseinheit (ggf. zusätzlich eine weitere Antriebseinheit, z. B. eine Verbrennungskraftmaschine), eine von der Antriebseinheit angetriebene Antriebswelle, eine erste Abtriebswelle sowie eine die Antriebswelle mit der ersten Abtriebswelle verbindende erste Kupplung und eine Steuereinheit auf. Das Verfahren umfasst zumindest die folgenden Schritte:
a) Feststellen einer (z. B. von einem Fahrer) gewünschten Änderung eines zumindest von der elektrischen Maschine bereitgestellten Antriebsdrehmoments;
b) Prüfen einer zu erwartenden bzw. möglichen Schwingungserregung bei Änderung des Antriebsdrehmoments;
c) Berechnen eines Anpassungsfaktors für die Änderung des einzuleitenden Antriebsdrehmoments;
d) Einleiten des durch den Anpassungsfaktor geänderten Antriebsdrehmoments ausgehend zumindest von der Antriebseinheit (zumindest) in die Antriebswelle.

Die obige (nicht abschließende) Einteilung der Verfahrensschritte in a) bis d) soll vorrangig nur zur Unterscheidung dienen und keine Reihenfolge und/oder Abhängigkeit erzwingen. Auch die Häufigkeit der Verfahrensschritte z. B. während der Einrichtung und/oder des Betriebes des Antriebssystems kann variieren. Ebenso ist möglich, dass Verfahrensschritte einander zumindest teilweise zeitlich überlagern und/oder dass einzelne oder mehrere Verfahrensschritte wiederholt werden.

Das Verfahren ist insbesondere darauf gerichtet, Schwingungserregungen, die in einem Antriebsstrang eines zumindest elektrisch angetriebenen Kraftfahrzeuges auftreten, zu reduzieren und/oder zu kompensieren.

Schwingungserregungen werden z. B. durch äußere Störungen (z. B. durch eine Unwucht bei Überfahren einer Bodenwelle) oder durch dynamische Lastwechsel der Antriebseinheit hervorgerufen. Eine Drehschwingung im Antriebsstrang kann sich insbesondere so weit aufschaukeln, dass es zu einer Abschaltung des elektrischen Antriebsstranges kommt. Zudem wirken im Schwingungsfall sehr hohe mechanische Kräfte, die ggf. die für die Belastung vorgesehenen Grenzwerte überschreiten.

Schwingungserregungen werden z. B. durch das Spiel im Getriebe oder in Gelenken der Seitenwellen einer Achse eines Kraftfahrzeuges hervorgerufen. Bei einem Lastwechsel der Antriebseinheit muss dieses Spiel zunächst durchlaufen werden, damit das Antriebsdrehmoment über alle Komponenten übertragbar ist. Während dieses Durchlaufs des Spiels kann kein Drehmoment übertragen werden und somit ändert die Schwingung im Antriebsstrang die Schwingungsform. Dieser nichtlineare Effekt erzeugt während des Durchlaufens des Spiels kein Gegendrehmoment für die Antriebseinheit und kann mit einem plötzlichen Einsetzen des Gegendrehmoments (wenn das Spiel durchlaufen ist) eine Störung, in der Regelung einer elektrischen Maschine durch die Steuereinheit, hervorrufen. Daraus kann ein Aufschaukeln des Regelkreises erfolgen und Geräuschprobleme in Form von Lastwechselklackern können auftreten.

Ein weiterer Grund für Schwingungen im Antriebsstrang können geringe Steifigkeiten der Seitenwellen in Kombination mit hochdynamischen Belastungen durch eine elektrische Antriebsmaschine sein.

Gerade bei Antriebssystemen, die eine elektrische Maschine als Antriebseinheit und zwei Kupplungen für eine Achse aufweisen (sogenannte Twinster-Systeme, bei denen die Kupplungen ein üblicherweise vorgesehenes Differential ersetzen), ist beobachtet worden, dass Schwingungen in besonders starker Weise erzeugt und verstärkt werden können. Aufgrund der hohen Dynamik einer elektrischen Maschine (also der hohen Geschwindigkeit, mit der Antriebsdrehmomente veränderbar sind) und der demgegenüber verzögerten Drehmomentübertragung der Kupplungen kann die elektrische Maschine ungewollt beschleunigen, wodurch ein Schlupf in den Kupplungen entsteht. Erreichen die Kupplungen dann das zu übertragene Antriebsdrehmoment, muss die elektrische Maschine wieder abgebremst werden. Damit wird eine unstetige Drehmomentübertragung erzeugt, die zu einer Schwingungserregung im Antriebstrang führen kann.

Die resultierenden starken mechanischen Belastungen der Komponenten eines Antriebssystems, z. B. Getriebe, Lagerungen, Wellen, Gelenke, Kupplungen, führen zu einer beschleunigten Alterung und können sogar ein plötzliches Versagen der Komponenten bedingen. Weiterhin führen die auftretenden Schwingungen im Antriebstrang zu einem für den Fahrer und/oder Insassen eines Kraftfahrzeugs spürbaren Ruckeln des Kraftfahrzeuges, z. B. beim Anfahren, das als sehr störend empfunden werden kann.

Der Schutz von Bauteilen bzw. Komponenten einerseits und der Komfort für die Nutzer des Kraftfahrzeuges andererseits erfordern ein ausreichend gedämpftes Antriebssystem, so dass eine maximale Fahrdynamik bei gleichzeitig stabilem Fahrverhalten erreicht werden kann.

Das Verfahren ist insbesondere darauf gerichtet, eine bestmögliche Beschleunigung des Kraftfahrzeuges und gleichzeitig ein hohes Maß an Fahrkomfort zu erreichen. Dafür wird das sich z. B. infolge eines Fahrerwunsches (abrupt) ändernde Antriebsdrehmoment der elektrischen Maschine nicht in den Antriebsstrang eingeleitet sondern zunächst in der Steuereinheit verarbeitet.

In der Steuereinheit wird geprüft, ob die gewünschte Änderung des Antriebsdrehmoments zu einer Schwingungserregung führen kann (Schritt b), insbesondere wenigstens einer vorstehend beschriebenen Schwingungserregung, deren Ursache z. B. im Betrieb des Fahrzeugs oder des Antriebssystems liegt bzw. mit diesem (unmittelbar) im Zusammenhang stehen kann.

Im Rahmen des Schrittes c) wird ein Anpassungsfaktor berechnet, durch den die erwartete Schwingungserregung bzw. deren Einfluss auf das Antriebssystem oder den Fahrbetrieb verhindert oder zumindest reduziert werden kann.

Erst im Rahmen des nachfolgenden oder sich anschließenden Schrittes d) wird ein durch den Anpassungsfaktor geändertes Antriebsdrehmoment durch die elektrische Maschine erzeugt und in den Antriebsstrang bzw. das Antriebssystem, ausgehend von der elektrischen Maschine, eingeleitet.

Der Anpassungsfaktor berücksichtigt insbesondere unterschiedliche Betriebspunkte (in Abhängigkeit z. B. von Fahrsituation, also Anfahren, Rollen, Beschleunigen, Verzögern, etc., sowie von Drehzahl, Antriebsdrehmoment, etc.) und die Eigenschaften des Antriebsstranges (Spiel der einzelnen Komponenten, Dämpfung, elastische Verformbarkeit, Regelverhalten von Komponenten, z. B. von Kupplungen, Rückkopplungen auf die Steuerung der elektrischen Maschine, die durch mechanische Spiele verursacht werden, Steifigkeiten der Wellen, Masse des Kraftfahrzeugs, Übersetzungen eines Getriebes, Massenträgheiten der Komponenten des Antriebssystems).

Insbesondere erfolgt eine Steuerung des Antriebsdrehmoments der elektrischen Antriebsmaschine in Abhängigkeit vom Fahrerwunsch in Zeitabständen von 0,5 bis 5 Millisekunden. Eine Steuerung des Antriebsdrehmoments im Rahmen des Verfahrens zur Beeinflussung der Schwingungserregung, insbesondere im Rahmen der Schritte b), c) und d), erfolgt insbesondere in Zeitabständen von 50 bis 250 Mikrosekunden. Damit kann gezielt und hochdynamisch durch eine Regelung des Antriebsdrehmoments der elektrischen Maschine ein Einfluss auf das Antriebssystem ausgeübt und so die Schwingungserregungen und Spiele kompensiert werden.

Das Verfahren zur Steuerung betrifft insbesondere die Regelung einer oder mehrerer Kupplungen des Antriebssystems, so dass diese zu vorgegebenen Zeitpunkten oder sogar jeder Zeit durch eine Anpresskraft betätigt werden können und damit ein von der Antriebseinheit bereitgestelltes Drehmoment in gewünschter Weise auf zumindest ein Rad mindestens einer, bevorzugt gemeinsamen, Achse des Kraftfahrzeuges übertragen werden kann.

Das Antriebssystem umfasst eine zweite Abtriebswelle und eine die Antriebswelle mit der zweiten Abtriebswelle verbindende zweite Kupplung, wobei die erste Abtriebswelle und die zweiten Abtriebswelle an einer gemeinsamen Achse angeordnet sind.

Das Verfahren ist zur Steuerung eines Antriebssystems vorgesehen, bei dem an einer gemeinsamen Achse des Kraftfahrzeuges zwei Kupplungen vorgesehen sind, wobei über jede der zwei Kupplungen jeweils ein Rad des Kraftfahrzeuges mit der Antriebseinheit des Kraftfahrzeuges drehmomentübertragend verbunden wird. Die zwei Kupplungen können das sonst übliche Differential ersetzen, durch das unterschiedliche Drehzahlen der Räder ausgeglichen werden können. Die Kupplungen können z. B. hydraulisch oder elektromechanisch betätigbare Kupplungen sein.

Der Aufbau derartiger Kupplungen und Antriebssysteme kann wie folgt beschrieben werden: Es können z. B. Lamellenkupplungen als Kupplungen eingesetzt werden, bei denen Außenlamellen mit einem Lamellenaußenträger und Innenlamellen mit einem Lamelleninnenträger (oder umgekehrt) drehfest verbunden sind und jeder Lamellenträger mit der Antriebswelle oder der jeweiligen Abtriebswelle drehfest verbunden ist. Infolge einer Beaufschlagung mit einer in einer axialen Richtung wirkenden Anpresskraft (infolge des Betätigungsdrucks) werden die Lamellen, bei anderen Kupplungen die Reibpartner oder eben die jeweils zur Erzeugung einer reibschlüssigen Verbindung zwischen drehmomentübertragenden Teilen der jeweiligen Kupplung, miteinander in Kontakt gebracht, so dass ein Drehmoment von der Antriebswelle über die Kupplung auf die jeweilige Abtriebswelle übertragen werden kann.

Gerade bei Antriebssystemen mit einer elektrischen Maschine als Antriebseinheit kann es (z. B. bei niedrigen Drehzahlen und ggf. gleichzeitig hohen bereitgestellten Antriebsdrehmoment und/oder bei hochdynamischen Änderungen des von der Antriebseinheit bereitgestellten Antriebsdrehmoments) vorkommen, dass ein von der Antriebseinheit bereitgestelltes Antriebsdrehmoment zumindest zeitweise größer ist als ein von den Kupplungen (in einem aktuellen Betriebspunkt) ggf. in Summe höchstens übertragbares Drehmoment (also Summe z. B. von über zwei Kupplungen übertragbaren Drehmomenten). In dieser Fahrsituation bzw. in diesem Betriebspunkt, wenn also das von der mindestens einen Antriebseinheit bereitgestellte Antriebsdrehmoment größer ist als das über die mindestens eine Kupplung übertragbare Drehmoment, beschleunigt die elektrische Maschine bzw. die Antriebswelle schneller als das Kraftfahrzeug bzw. die mindestens eine Abtriebswelle. Damit entsteht an zumindest einer Kupplung ein Schlupf, der zu hohen Reibleistungen in den Kupplungen (zumindest einer Kupplung) führt. Die daraus resultierende thermische Belastung kann eine Kupplung zerstören oder zumindest schädigen. Weiter wird so die Effizienz des Antriebssystems reduziert und die CO₂-Bilanz verschlechtert.

Grundsätzlich kann ein geringer Schlupf (ein sogenannter Mikro-Schlupf) durchaus zulässig und auch beabsichtigt sein. Dieser wird insbesondere deswegen zugelassen, weil so festgestellt werden kann, dass ein z. B. vom Fahrer gewünschtes bzw. ein von der Antriebseinheit bereitgestelltes Antriebsdrehmoment in der beabsichtigen Verteilung (also vorbestimmte Anteile des Drehmoments an jedes Rad des Kraftfahrzeugs) über die Kupplungen übertragen wird. Die thermische Belastung durch den Mikro-Schlupf führt jedoch nicht zu einer unzulässigen thermischen Belastung der Kupplungen.

Derartige Betriebspunkte liegen z. B. vor, wenn das Kraftfahrzeug sich in einer Kurvenfahrt befindet und die Räder einer gemeinsamen Achse unterschiedliche Geschwindigkeiten aufweisen sollten. Hierbei wird ein über die kurveninnere Kupplung übertragenes Drehmoment verringert, um ein Gier-Verhalten des Kraftfahrzeuges zu verbessern.

Insbesondere wird bei dem Verfahren ein Übertragungsverhalten der beiden Kupplungen in Bezug auf die Aufteilung und Übertragung des Antriebsdrehmoments auf die Abtriebswellen berücksichtigt.

Für beide Kupplungen ist jeweils ein Grenzwert für einen maximal zulässigen Schlupf definiert; wobei der Anpassungsfaktor und/oder eine Gegenschwingung so gewählt werden, dass der Grenzwert dauerhaft unterschritten wird.

Durch das vorgeschlagene Verfahren kann ein durch die Antriebseinheit zum Antrieb der ersten Abtriebswelle und der zweiten Abtriebswelle bereitstellbares Antriebsdrehmoment in Abhängigkeit von einer Summe der über die Kupplungen in einem Betriebspunkt maximal übertragbaren Drehmomente begrenzt werden. Insbesondere kann das von der Antriebseinheit bereitgestellte Antriebsdrehmoment höchstens der Summe der maximal übertragbaren Drehmomente entsprechen. Ein höheres Antriebsdrehmoment würde das Kraftfahrzeug nicht beschleunigen, sondern nur den Schlupf in zumindest einer der Kupplungen vergrößern - dies wird hiermit reduziert bzw. sogar vermieden.

Das Verfahren, und insbesondere nur Schritt a), wird insbesondere in bestimmten Betriebspunkten der Antriebseinheit oder bei bestimmten Fahrsituationen und dabei auftretenden Änderungen des Antriebsdrehmoments durchgeführt.

Gemäß einem weiteren Aspekt wird ein (zweites) Verfahren zur Steuerung eines Antriebssystems für genau eine Achse eines Kraftfahrzeuges vorgeschlagen. Das Antriebssystem umfasst zumindest eine elektrische Maschine als Antriebseinheit (ggf. zusätzlichen eine weitere Antriebseinheit, z. B. eine Verbrennungskraftmaschine), eine von der Antriebseinheit angetriebene Antriebswelle, eine erste Abtriebswelle und eine zweite Abtriebswelle sowie eine die Antriebswelle mit der ersten Abtriebswelle verbindende erste Kupplung und eine die Antriebswelle mit der zweiten Abtriebswelle verbindende zweite Kupplung und weiter eine Steuereinheit zur Regelung der Antriebseinheit und der Kupplungen. Die erste Abtriebswelle und die zweite Abtriebswelle sind an einer gemeinsamen Achse angeordnet. Das Verfahren umfasst zumindest die folgenden Schritte:
1) Feststellen einer gewünschten Änderung eines zumindest von der elektrischen Maschine bereitgestellten Antriebsdrehmoments;
2) Prüfen einer sich durch die bereits erfolgte Änderung des Antriebsdrehmoments einstellenden Schwingungserregung;
3) Berechnen einer Gegenschwingung zur Beeinflussung des bereitgestellten Antriebsdrehmoments;
4) Einleiten der Gegenschwingung;
wobei ein Übertragungsverhalten der beiden Kupplungen in Bezug auf die Aufteilung und Übertragung des Antriebsdrehmoments auf die Abtriebswellen berücksichtigt wird.

Auf die Ausführungen zu dem (ersten) Verfahren wird verwiesen, so dass diese Erläuterungen auch zur Charakterisierung des (zweiten) Verfahrens herangezogen werden können, und umgekehrt. Beide Verfahren können auch in Kombination, beispielsweise zeitlich nacheinander, durchgeführt werden.

Das Antriebssystem umfasst hier eine zweite Abtriebswelle und eine zweite Kupplung. Weiter wird die sich infolge der Änderung des Antriebsdrehmoments einstellende Schwingungserregung erst nach ihrem Auftreten erfasst und geprüft und dann gemäß Schritt 3) eine Gegenschwingung eingeleitet.

Die Gegenschwingung wird insbesondere durch eine Ansteuerung der elektrischen Maschine erzeugt, insbesondere durch eine Regelung des Antriebsdrehmoments.

Insbesondere erfolgt eine Steuerung des Antriebsdrehmoments der elektrischen Antriebsmaschine in Abhängigkeit vom Fahrerwunsch in Zeitabständen von 0,5 bis 5 Millisekunden [ms]. Eine Steuerung des Antriebsdrehmoments im Rahmen des Verfahrens zur Beeinflussung der Schwingungserregung gemäß der Schritte 2), 3) und 4) erfolgt insbesondere in Zeitabständen von 50 bis 250 Mikrosekunden [µs]. Damit kann gezielt und hochdynamisch durch eine Regelung des Antriebsdrehmoments der elektrischen Maschine ein Einfluss auf das Antriebssystem ausgeübt und so die Schwingungserregungen und Spiele kompensiert werden.

Mit der Überprüfung des infolge einer (z. B. vom Fahrer) gewünschten Änderung des von der zumindest von der elektrischen Maschine bereitgestellten Antriebsdrehmoments durch die Steuereinheit und der daraus abgeleiteten Anpassung des einzuleitenden Antriebsdrehmoments durch den ermittelten Anpassungsfaktor bzw. der Einleitung einer Gegenschwingung kann eine Systemdämpfung des Antriebssystems deutlich erhöht werden. Eine Erhöhung der Systemdämpfung kann entsprechend auftretende Schwingungen reduzieren oder sogar kompensieren.

Weiter wird das in die Antriebswelle eingeleitete Antriebsdrehmoment so durch den Anpassungsfaktor bzw. die Gegenschwingung geändert, dass ein für die Kupplungen definierter Grenzwert in Bezug auf den maximal zulässigen Schlupf dauerhaft unterschritten wird.

Weiter wird ein Kraftfahrzeug vorgeschlagen, zumindest aufweisend ein Antriebssystem für genau eine Achse des Kraftfahrzeuges, wobei das Antriebssystem zumindest eine elektrische Maschine als Antriebseinheit, eine von der Antriebseinheit angetriebene Antriebswelle, eine erste Abtriebswelle sowie eine die Antriebswelle mit der ersten Abtriebswelle verbindende erste Kupplung, zusätzlich eine zweite Abtriebswelle sowie eine die Antriebswelle mit der zweiten Abtriebswelle verbindende zweite Kupplung, und weiter eine Steuereinheit zur Regelung der Antriebseinheit und der Kupplung aufweist. Die Steuereinheit ist zur Durchführung der (ersten und des zweiten) Verfahren geeignet und/oder eingerichtet. Insbesondere können mit der Steuereinheit die Verfahren durchgeführt werden.

Durch die Betätigung der ersten Kupplung und der zweiten Kupplung ist jeweils ein Rad einer gemeinsamen Achse des Kraftfahrzeuges mit der Antriebseinheit drehmomentübertragend verbindbar.

Insbesondere ist zwischen der Antriebseinheit und den Abtriebswellen ein Getriebe mit einer variablen Übersetzung angeordnet. Variable Übersetzung bedeutet insbesondere, dass nicht eine einzige konstante Übersetzung vorliegt, sondern dass die Übersetzung verändert werden kann, z. B. in Stufen oder auch kontinuierlich.

Zwischen der Antriebseinheit und den Abtriebswellen kann alternativ kein Getriebe oder ein Getriebe mit einer einzigen festen Übersetzung angeordnet sein.

Zumindest eine der beiden Kupplungen kann eine hydraulisch betätigte Kupplung sein, bevorzugt sind das beide Kupplungen. Bei einer hydraulisch betätigten Kupplung wird der Anpressdruck über ein Hydraulikfluid auf die Kupplung übertragen. Das Hydraulikfluid kann über eine (auch elektrisch betreibbare) Pumpe unter Druck gesetzt werden.

Zumindest eine der beiden Kupplungen kann eine elektrisch bzw. elektromechanisch betätigte Kupplung sein, bevorzugt sind das beide Kupplungen. Bei einer elektrisch betätigten Kupplung wird der Anpressdruck unmittelbar durch eine weitere elektrische Maschine erzeugt, z. B. durch eine über die Maschine verdrehbare Rampenanordnung.

Insbesondere kann infolge der Betätigung jede der Kupplungen jeweils ein Rad der gemeinsamen Achse des Kraftfahrzeuges mit der Antriebseinheit drehmomentübertragend verbunden werden.

Bevorzugt ist zumindest eine Kupplung, insbesondere sind beide Kupplungen, eine Lamellenkupplung.

Die Ausführungen zu den Verfahren gelten insbesondere auch für das Kraftfahrzeug und umgekehrt.

Insbesondere sind die beiden Kupplungen zur Übertragung von Drehmomenten an einer Achse eines Kraftfahrzeuges angeordnet, so dass durch das Betätigen der ersten Kupplung ein erstes Rad einer Achse und durch das Betätigen der zweiten Kupplung ein zweites Rad derselben Achse des Kraftfahrzeuges mit der Antriebseinheit drehmomentübertragend verbunden wird. Die Kupplungen sind also insbesondere keine Kupplungen eines Kraftfahrzeuges, die zwischen der Antriebseinheit und einem schaltbaren Getriebe des Kraftfahrzeuges angeordnet sind.

Derartige, gemeinsam an einer Achse angeordnete Kupplungen müssen (oft) sprunghafte Änderungen eines ersten Drehmoments verarbeiten und dieses in vorbestimmter Weise an die Räder weiterleiten.

Die hier vorgeschlagenen Verfahren können mit einem auf einem Computer ausgeführten Verfahren, umfassend teilweise oder vollständig die hier geschilderten Schritte realisiert sein.

Weiter wird ein System zur Datenverarbeitung vorgeschlagen, welches eine Recheneinheit bzw. einen Prozessor umfasst, der so angepasst und/oder konfiguriert ist, dass sie bzw. er teilweise oder vollständig die hier geschilderten Schritte ausführt.

Der Computer, die Recheneinheit und/oder der Prozessor können Teil der Steuereinheit, insbesondere der übergeordneten Steuereinheit des Fahrzeugs, sein und/oder mit dieser Steuereinheit datenleitend verbunden sein.

Es wird auch ein Computerprogramm bzw. ein Computerprogrammprodukt vorgeschlagen, umfassend Befehle, die bei der Ausführung des Programms durch einen Computer diesen veranlassen, teilweise oder vollständig die hier geschilderten Schritte auszuführen.

Auch wird ein computerlesbares Speichermedium vorgeschlagen, umfassend Befehle, die bei der Ausführung durch einen Computer diesen veranlassen, teilweise oder vollständig die hier geschilderten Schritte auszuführen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: ein Kraftfahrzeug mit einem Antriebssystem zum Antrieb jeweils eines Rades des Kraftfahrzeugs; und
- Fig. 2:: ein Ablauf des ersten Verfahrens; und
- Fig. 3:: ein Ablauf des zweiten Verfahrens.

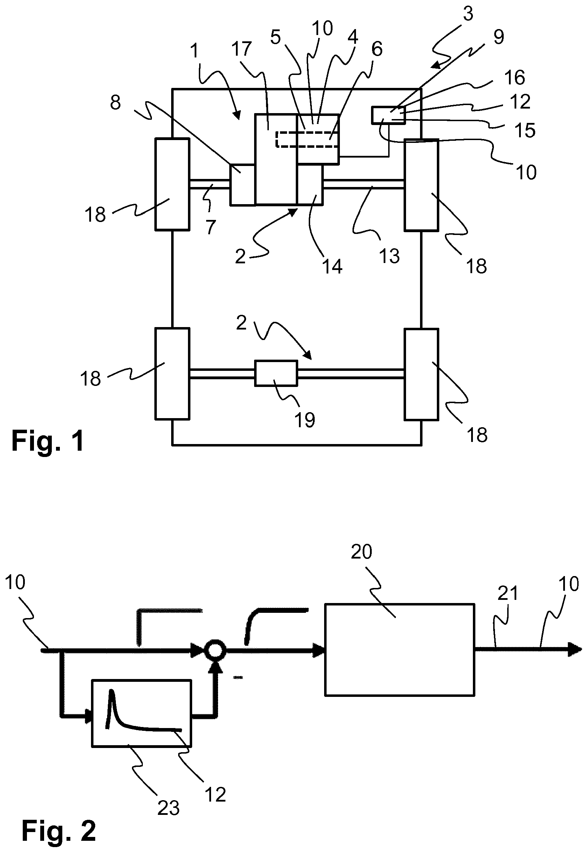

Fig. 1 zeigt ein Kraftfahrzeug 3 mit einem Antriebssystem 1 zum Antrieb von zwei Rädern 18 einer gemeinsamen Achse 2 des Kraftfahrzeugs 3. Das Antriebssystem 1 umfasst eine elektrische Maschine 4 als Antriebseinheit 5, eine von der Antriebseinheit 5 angetriebene Antriebswelle 6, eine erste Abtriebswelle 7 und eine zweite Abtriebswelle 13 sowie eine die Antriebswelle 6 mit der ersten Abtriebswelle 7 verbindende erste Kupplung 8 und eine die Antriebswelle 6 mit der zweiten Abtriebswelle 13 verbindende zweite Kupplung 14. Weiter ist eine Steuereinheit 9 zur Regelung der Antriebseinheit 5 und der beiden Kupplungen 8, 13 vorgesehen.

Hier ist ein Antriebssystem 1 dargestellt, bei dem an einer gemeinsamen Achse 2 des Kraftfahrzeuges 3 zwei Kupplungen 8, 14 vorgesehen sind, wobei über jede der zwei Kupplung 8, 14 jeweils ein Rad 18 des Kraftfahrzeuges 3 mit der Antriebseinheit 5 des Kraftfahrzeuges 3 drehmomentübertragend verbunden wird. Die zwei Kupplungen 8, 14 ersetzen ein sonst übliches Differential 19 (hier an der anderen Achse 2 des Kraftfahrzeugs 3 dargestellt), durch das unterschiedliche Drehzahlen der dort angeordneten Räder ausgeglichen werden können.

Zwischen der Antriebseinheit 5 und den Abtriebswellen 7, 13 ist ein Getriebe 17 mit einer variablen Übersetzung angeordnet.

Durch die vorgeschlagenen Verfahren soll ein durch die Antriebseinheit 5 zum Antrieb der ersten Abtriebswelle 7 und der zweiten Abtriebswelle 13 bereitstellbares Antriebsdrehmoment 10 einerseits durch einen Anpassungsfaktor 12 vor Einleitung des Antriebsdrehmoments 10 in die Antriebswelle 6 geändert werden und andererseits durch die Änderung des Antriebsdrehmoments 10 eine Gegenschwingung 16 erzeugt werden.

Über das (erste) Verfahren wird in Schritt a) festgestellt, dass eine (z. B. von einem Fahrer) gewünschten Änderung eines von der elektrischen Maschine 4 bereitgestellten Antriebsdrehmoments 10 vorliegt. In Schritt b) wird geprüft, ob eine mögliche Schwingungserregung 11 bei Änderung des Antriebsdrehmoments 10 erfolgt. In Schritt c) wird ein Anpassungsfaktor 12 für die Änderung des einzuleitenden Antriebsdrehmoments 10 errechnet. In Schritt d) wird das durch den Anpassungsfaktor 12 geänderte Antriebsdrehmoment 10 ausgehend von der Antriebseinheit 5 in die Antriebswelle 6 eingeleitet.

Über das (zweite) Verfahren wird in Schritt 1) festgestellt, dass eine (z. B. von einem Fahrer) gewünschten Änderung eines von der elektrischen Maschine 4 bereitgestellten Antriebsdrehmoments 10 vorliegt. In Schritt 2) wird geprüft, ob sich durch die bereits erfolgte Änderung des Antriebsdrehmoments 10 eine Schwingungserregung 11 in dem Antriebssystem 1 einstellt. In Schritt 3) wird eine Gegenschwingung 16 zur Beeinflussung des bereitgestellten Antriebsdrehmoments 10 errechnet und in Schritt 4) über eine Änderung des Antriebsdrehmoments 10 in die Antriebswelle 6 eingeleitet.

Für beide Kupplungen 8, 14 ist jeweils ein Grenzwert 15 für einen maximal zulässigen Schlupf definiert und in der Steuereinheit 9 hinterlegt, wobei der Anpassungsfaktor 12 und auch die Gegenschwingung 16 so gewählt werden, dass der Grenzwert dauerhaft unterschritten wird.

Fig. 2 zeigt ein Ablauf des ersten Verfahrens. Auf die Ausführungen zu Fig. 1 wird Bezug genommen.

Dieser hier gezeigte sogenannte "passive Ansatz" basiert auf einem offenen Regelkreis. Hierbei wird die Anforderung für das Antriebsdrehmoment 10 angepasst, damit das Antriebssystem 1 überhaupt nicht zum Schwingen angeregt wird. Aus diesem Grund ist eine Kenntnis oder Prüfung von physikalischen Zustandsgrößen des Antriebssystems 1 insbesondere nicht notwendig. Die Anpassung des Antriebsdrehmoments 10 über den Regler 23 und durch den Anpassungsfaktor 12 basiert auf einer Reduktion der Zeitantwort des Antriebssystems 1 (siehe angedeutete Regelverhalten). Um eine effektive Schwingungsreduktion erreichen zu können, muss der Anpassungsfaktor 12 für das jeweilige Fahrzeug appliziert werden. Da sich schwingungsrelevante Fahrzustände ändern, beinhaltet der passive Ansatz eine Erkennung dieser Zustände. Verändert sich der Fahrzustand (Anfahren am Hang, Anhänger angekoppelt, etc.) werden die jeweiligen Applikationsgrößen daraufhin angepasst und der entsprechende Anpassungsfaktor 12 ausgewählt. Das durch den Anpassungsfaktor 12 geänderte Antriebsdrehmoment 10 wird über ein Modul 20 in physikalische Signale 21 zur Ansteuerung der elektrischen Maschine 4 umgewandelt.

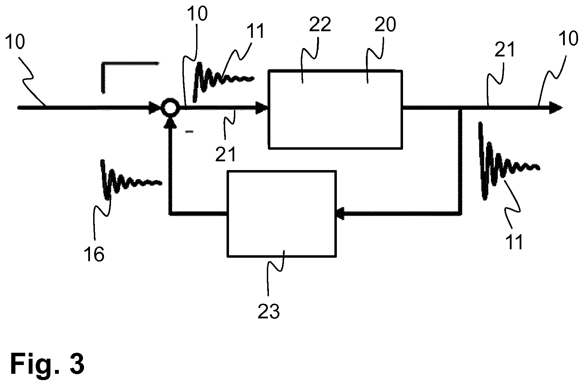

Fig. 3 zeigt ein Ablauf des zweiten Verfahrens. Dieser "aktive Ansatz" basiert auf einem geschlossenen Regelkreis. Durch ein hinterlegtes mathematisches Modell im Modul 20 und mit Hilfe der vorhandenen gemessenen Signale 21 werden durch zusätzliche geschätzte physikalische Zustandsgrößen 22 die Schwingungsanteile im Antriebsmoment 10 ermittelt und aktiv eine Gegenschwingung 16 durch den Regler 23 berechnet. Diese Gegenschwingung 16 wird mit dem geforderten (gewünschten) Antriebsdrehmoment 10 verrechnet und als Sollwert an die Drehmomentsteuerung übergeben. Für die Schätzung der physikalischen Zustandsgrößen 22 stehen unterschiedliche Modelle zur Verfügung, die jeweils unterschiedliche Messsignale voraussetzen. Als Eingangsgrößen z. B. dienen die Raddrehzahlen, die Fahrzeuggeschwindigkeit, die Drehzahl der elektrischen Maschine 4 oder das geschätzte Antriebsdrehmoment der elektrischen Maschine 4. Kombinationen aus diesen Eingangsgrößen sind ebenfalls möglich.

Das durch die Gegenschwingung 16 geänderte Antriebsdrehmoment 10 wird über das Modul 20 in physikalische Signale 21 zur Ansteuerung der elektrischen Maschine 4 umgewandelt.

### Bezugszeichenliste

- 1: Antriebssystem
- 2: Achse
- 3: Kraftfahrzeug
- 4: Maschine
- 5: Antriebseinheit
- 6: Antriebswelle
- 7: erste Abtriebswelle
- 8: erste Kupplung
- 9: Steuereinheit
- 10: Antriebsdrehmoment
- 11: Schwingungserregung
- 12: Anpassungsfaktor
- 13: zweite Abtriebswelle
- 14: zweite Kupplung
- 15: Grenzwert
- 16: Gegenschwingung
- 17: Getriebe
- 18: Rad
- 19: Differential
- 20: Modul
- 21: Signal
- 22: Zustandsgröße
- 23: Regler

## Patentansprüche

1. Verfahren zur Steuerung eines Antriebssystems (1) für genau eine Achse (2) eines Kraftfahrzeuges (3), wobei das Antriebssystem (1) zumindest eine elektrische Maschine (4) als Antriebseinheit (5), eine von der Antriebseinheit (5) angetriebene Antriebswelle (6), eine erste Abtriebswelle (7) sowie eine die Antriebswelle (6) mit der ersten Abtriebswelle (7) verbindende erste Kupplung (8) und eine Steuereinheit (9) aufweist, wobei das Verfahren zumindest die folgenden Schritte aufweist:
a) Feststellen einer gewünschten Änderung eines zumindest von der elektrischen Maschine (4) bereitgestellten Antriebsdrehmoments (10);
b) Prüfen einer zu erwartenden Schwingungserregung (11) bei Änderung des Antriebsdrehmoments (10);
c) Berechnen eines Anpassungsfaktors (12) für die Änderung des einzuleitenden Antriebsdrehmoments (10);
d) Einleiten des durch den Anpassungsfaktor (12) geänderten Antriebsdrehmoments (10) ausgehend zumindest von der Antriebseinheit (5) in die Antriebswelle (6);
wobei das Antriebssystem (1) eine zweite Abtriebswelle (13) und eine die Antriebswelle (6) mit der zweiten Abtriebswelle (13) verbindende zweite Kupplung (14) umfasst, wobei die erste Abtriebswelle (7) und die zweiten Abtriebswelle (13) an der gemeinsamen Achse (2) angeordnet sind; wobei über jede der zwei Kupplungen (8, 14) jeweils ein Rad (18) des Kraftfahrzeuges (3) mit der Antriebseinheit (5) des Kraftfahrzeuges (3) drehmomentübertragend verbunden wird; wobei die Kupplungen (8, 14) mit einem Schlupf betrieben werden, so dass ein von der Antriebseinheit (5) bereitgestelltes Antriebsdrehmoment in der beabsichtigen Verteilung über die Kupplungen (8, 14) übertragen wird; wobei ein Übertragungsverhalten der beiden Kupplungen (8, 14) in Bezug auf die Aufteilung und Übertragung des Antriebsdrehmoments (10) auf die Abtriebswellen (7, 13) berücksichtigt wird; wobei für beide Kupplungen (8, 14) jeweils ein Grenzwert (15) für einen maximal zulässigen Schlupf definiert ist; wobei der Anpassungsfaktor (12) so gewählt wird, dass der Grenzwert (15) dauerhaft unterschritten wird.

2. Verfahren zur Steuerung eines Antriebssystems (1) für genau eine Achse (2) eines Kraftfahrzeuges (3), wobei das Antriebssystem (1) zumindest eine elektrische Maschine (4) als Antriebseinheit (5), eine von der Antriebseinheit (5) angetriebene Antriebswelle (6), eine erste Abtriebswelle (7) und eine zweite Abtriebswelle (13) sowie eine die Antriebswelle (6) mit der ersten Abtriebswelle (7) verbindende erste Kupplung (8) und eine die Antriebswelle (6) mit der zweiten Abtriebswelle (13) verbindende zweite Kupplung (14) und weiter eine Steuereinheit (9) zur Regelung der Antriebseinheit (5) und der Kupplungen (8, 14) aufweist, wobei die erste Abtriebswelle (7) und die zweite Abtriebswelle (13) an einer gemeinsamen Achse (2) angeordnet sind; wobei über jede der zwei Kupplungen (8, 14) jeweils ein Rad (18) des Kraftfahrzeuges (3) mit der Antriebseinheit (5) des Kraftfahrzeuges (3) drehmomentübertragend verbunden wird; wobei die Kupplungen (8, 14) mit einem Schlupf betrieben werden, so dass ein von der Antriebseinheit (5) bereitgestelltes Antriebsdrehmoment in der beabsichtigen Verteilung über die Kupplungen (8, 14) übertragen wird; wobei das Verfahren zumindest die folgenden Schritte aufweist:
1) Feststellen einer gewünschten Änderung eines zumindest von der elektrischen Maschine (4) bereitgestellten Antriebsdrehmoments (10);
2) Prüfen einer sich durch die bereits erfolgte Änderung des Antriebsdrehmoments (10) einstellenden Schwingungserregung (11);
3) Berechnen einer Gegenschwingung (16) zur Beeinflussung des bereitgestellten Antriebsdrehmoments (10);
4) Einleiten der Gegenschwingung (16);
wobei ein Übertragungsverhalten der beiden Kupplungen (8, 14) in Bezug auf die Aufteilung und Übertragung des Antriebsdrehmoments (10) auf die Abtriebswellen (7, 13) berücksichtigt wird; wobei für beide Kupplungen (8, 14) jeweils ein Grenzwert (15) für einen maximal zulässigen Schlupf definiert ist; wobei die Gegenschwingung (16) so gewählt wird, dass der Grenzwert (15) dauerhaft unterschritten wird.

3. Kraftfahrzeug (3), zumindest aufweisend ein Antriebssystem (1) für genau eine Achse (2) des Kraftfahrzeuges (3), wobei das Antriebssystem (1) zumindest eine elektrische Maschine (4) als Antriebseinheit (5), eine von der Antriebseinheit (5) angetriebene Antriebswelle (6), eine erste Abtriebswelle (7), eine die Antriebswelle (6) mit der ersten Abtriebswelle (7) verbindende erste Kupplung (8), eine zweite Abtriebswelle (13) und eine die Antriebswelle (6) mit der zweiten Abtriebswelle (13) verbindende zweite Kupplung (14) und weiter eine Steuereinheit (9) zur Regelung der Antriebseinheit (5) und zumindest der ersten Kupplung (8) und der zweiten Kupplung (14) aufweist, wobei die erste Abtriebswelle (7) und die zweiten Abtriebswelle (13) an der gemeinsamen Achse (2) angeordnet sind, wobei über jede der zwei Kupplungen (8, 14) jeweils ein Rad (18) des Kraftfahrzeuges (3) mit der Antriebseinheit (5) des Kraftfahrzeuges (3) drehmomentübertragend verbindbar ist; wobei die Steuereinheit (9) zur Durchführung des Verfahren nach einem der vorhergehenden Patentansprüche eingerichtet ist.

## Claims

1. Method for controlling a drive system (1) for precisely one axle (2) of a motor vehicle (3), wherein the drive system (1) has at least one electrical machine (4) as drive unit (5), a drive shaft (6) which is driven by the drive unit (5), a first output shaft (7) and also a first clutch (8) which connects the drive shaft (6) to the first output shaft (7), and a control unit (9), wherein the method comprises at least the following steps:
a) determining a desired change in a drive torque (10) which is provided at least by the electrical machine (4);
b) checking vibratory excitation (11) to be expected in the event of a change in the drive torque (10);
c) calculating an adjustment factor (12) for the change in the drive torque (10) to be introduced;
d) introducing the drive torque (10), which is changed by the adjustment factor (12), starting at least from the drive unit (5) into the drive shaft (6)
wherein the drive system (1) comprises a second output shaft (13) and a second clutch (14) which connects the drive shaft (6) to the second output shaft (13), wherein the first output shaft (7) and the second output shaft (13) are arranged on a common axle (2); wherein in each case one wheel (18) of the motor vehicle (3) is connected in a torque-transmitting manner to the drive unit (5) of the motor vehicle (3) by means of each of the two clutches (8, 14); wherein the clutches (8, 14) are operated with a slip, so that a drive torque which is provided by the drive unit (5) can be transmitted via the clutches (8, 14) with the intended distribution; wherein a transmission behaviour of the two clutches (8, 14) in respect of the splitting and transmission of the drive torque (10) to the output shafts (7, 13) is taken into account; wherein a limit value (15) for a maximum permissible slip is defined for the two clutches (8, 14) in each case; wherein the adjustment factor (12) is selected such that the limit value (15) is permanently undershot.

2. Method for controlling a drive system (1) for precisely one axle (2) of a motor vehicle (3), wherein the drive system (1) has at least one electrical machine (4) as drive unit (5), a drive shaft (6) which is driven by the drive unit (5), a first output shaft (7) and a second output shaft (13) and also a first clutch (8) which connects the drive shaft (6) to the first output shaft (7) and a second clutch (14) which connects the drive shaft (6) to the second output shaft (13), and furthermore a control unit (9) for controlling the drive unit (5) and the clutches (8, 14), wherein the first output shaft (7) and the second output shaft (13) are arranged on a common axle (2); wherein in each case one wheel (18) of the motor vehicle (3) is connected in a torque-transmitting manner to the drive unit (5) of the motor vehicle (3) by means of each of the two clutches (8, 14); wherein the clutches (8, 14) are operated with a slip, so that a drive torque which is provided by the drive unit (5) can be transmitted via the clutches (8, 14) with the intended distribution; wherein the method comprises at least the following steps:
1) determining a desired change in a drive torque (10) which is provided at least by the electrical machine (4);
2) checking vibratory excitation (11) which is established owing to the change in the drive torque (10) which has already taken place;
3) calculating an opposing vibration (16) for influencing the provided drive torque (10);
4) introducing the opposing vibration (16);
wherein a transmission behaviour of the two clutches (8, 14) in respect of the splitting and transmission of the drive torque (10) to the output shafts (7, 13) is taken into account; wherein a limit value (15) for a maximum permissible slip is defined for the two clutches (8, 14) in each case; wherein the opposing vibration (16) is selected such that the limit value (15) is permanently undershot.

3. Motor vehicle (3), at least having a drive system (1) for precisely one axle (2) of the motor vehicle (3), wherein the drive system (1) has at least one electrical machine (4) as drive unit (5), a drive shaft (6) which is driven by the drive unit (5), a first output shaft (7), a first clutch (8) which connects the drive shaft (6) to the first output shaft (7), a second output shaft (13) and a second clutch (14) which connects the drive shaft (6) to the second output shaft (13), and furthermore a control unit (9) for controlling the drive unit (5) and at least the first clutch (8) and the second clutch (14), wherein the first output shaft (7) and the second output shaft (13) are arranged on the common axle (2); wherein in each case one wheel (18) of the motor vehicle (3) is connected in a torque-transmitting manner to the drive unit (5) of the motor vehicle (3) by means of each of the two clutches (8, 14); wherein the control unit (9) is designed for carrying out the method according to one of the preceding claims.

## Revendications

1. Procédé permettant de commander un système d'entraînement (1) pour exactement un essieu (2) d'un véhicule automobile (3), dans lequel le système d'entraînement (1) présente au moins une machine électrique (4) servant d'unité d'entraînement (5), un arbre d'entraînement (6) entraîné par l'unité d'entraînement (5), un premier arbre de sortie (7) ainsi qu'un premier accouplement (8) reliant l'arbre d'entraînement (6) au premier arbre de sortie (7), et une unité de commande, le procédé présentant au moins les étapes suivantes consistant à :
a) constater une modification souhaitée d'un couple d'entraînement (10) fourni au moins par la machine électrique (4) ;
b) vérifier une excitation vibratoire attendue (11) en cas de modification du couple d'entraînement (10) ;
c) calculer un facteur d'adaptation (12) pour la modification du couple d'entraînement (10) à introduire ;
d) introduire le couple d'entraînement (10) modifié par le facteur d'adaptation (12) en allant au moins de l'unité d'entraînement (5) à l'arbre d'entraînement (6) ;
dans lequel le système d'entraînement (1) comprend un deuxième arbre de sortie (13) et un deuxième accouplement (14) reliant l'arbre d'entraînement (6) au deuxième arbre de sortie (13), le premier arbre de sortie (7) et le deuxième arbre de sortie (13) étant disposés sur un essieu commun (2) ; dans lequel, par l'intermédiaire de chacun des deux accouplements (8, 14), respectivement une roue (18) du véhicule automobile (3) est reliée en transmission de couple à l'unité d'entraînement (5) du véhicule automobile (3) ; dans lequel les accouplements (8, 14) fonctionnent avec un glissement de sorte qu'un couple d'entraînement fourni par l'unité d'entraînement (5) est transmis avec la répartition prévue par l'intermédiaire des accouplements (8, 14) ; dans lequel un comportement de transmission des deux accouplements (8, 14) concernant la répartition et la transmission du couple d'entraînement (10) aux arbres de sortie (7, 13) est pris en compte ; dans lequel, pour les deux accouplements (8, 14), respectivement une valeur limite (15) est définie pour un glissement admissible maximal ; dans lequel le facteur d'adaptation (12) est choisi de telle sorte que la valeur limite (15) est soupassée durablement.

2. Procédé permettant de commander un système d'entraînement (1) pour exactement un essieu (2) d'un véhicule automobile (3), dans lequel le système d'entraînement (1) présente au moins une machine électrique (4) servant d'unité d'entraînement (5), un arbre d'entraînement (6) entraîné par l'unité d'entraînement (5), un premier arbre de sortie (7) et un deuxième arbre de sortie (13), ainsi qu'un premier accouplement (8) reliant l'arbre d'entraînement (6) au premier arbre de sortie (7) et un deuxième accouplement (14) reliant l'arbre d'entraînement (6) au deuxième arbre de sortie (13), et en outre une unité de commande (9) pour réguler l'unité d'entraînement (5) et les accouplements (8, 14), dans lequel le premier arbre de sortie (7) et le deuxième arbre de sortie (13) sont disposés sur un essieu commun (2) ; dans lequel, par l'intermédiaire de chacun des deux accouplements (8, 14), respectivement une roue (18) du véhicule automobile (3) est reliée en transmission de couple à l'unité d'entraînement (5) du véhicule automobile (3) en transmission de couple ; dans lequel les accouplements (8, 14) fonctionnement avec un glissement de sorte qu'un couple d'entraînement fourni par l'unité d'entraînement (5) est transmis avec la répartition prévue par l'intermédiaire des accouplements (8, 14) ; le procédé présentant au moins les étapes suivantes consistant à :
1) constater une modification souhaitée d'un couple d'entraînement (10) fourni au moins par la machine électrique (4) ;
2) vérifier une excitation vibratoire (11) survenant suite à la modification du couple d'entraînement (10) déjà effective ;
3) calculer une contre-vibration (16) pour influencer le couple d'entraînement (10) fourni ;
4) introduire la contre-vibration (16) ;
dans lequel un comportement de transmission des deux accouplements (8, 14) concernant la répartition et la transmission du couple d'entraînement (10) aux arbres de sortie (7, 13) est pris en compte ; dans lequel, pour les deux accouplements (8, 14), respectivement une valeur limite (15) est définie pour un glissement admissible maximal ; dans lequel la contre-vibration (16) est choisie de telle sorte que la valeur limite (15) est soupassée durablement.

3. Véhicule automobile (3), présentant au moins un système d'entraînement (1) pour exactement un essieu (2) du véhicule automobile (3), dans lequel le système d'entraînement (1) présente au moins une machine électrique (4) servant d'unité d'entraînement (5), un arbre d'entraînement (6) entraîné par l'unité d'entraînement (5), un premier arbre de sortie (7), un premier accouplement (8) reliant l'arbre d'entraînement (6) au premier arbre de sortie (7), un arbre de sortie (13) et un deuxième accouplement (14) reliant l'arbre d'entraînement (6) au deuxième arbre de sortie (14), et en outre une unité de commande (9) pour réguler l'unité d'entraînement (5) et au moins le premier accouplement (8) et le deuxième accouplement (14), dans lequel le premier arbre de sortie (7) et le deuxième arbre de sortie (13) sont disposés sur l'essieu commun (2), dans lequel, par l'intermédiaire de chacun des deux accouplements (8, 14), respectivement une roue (18) du véhicule automobile (3) peut être reliée en transmission de couple à l'unité d'entraînement (5) du véhicule automobile (3) ; dans lequel l'unité de commande (9) est conçue pour exécuter le procédé selon l'une quelconque des revendications précédentes.
